# NEUE EUROPÄISCHE PATENTSCHRIFT

(11) **EP 3 044 249 B2**
(45) Veröffentlichungstag und Bekanntmachung des Hinweises auf die Entscheidung über den Einspruch: **13.09.2023**
(45) Hinweis auf die Patenterteilung: 21.06.2017
(21) Anmeldenummer: 14758946.9
(22) Anmeldetag: 04.09.2014
(51) Int. Cl.: C08G 75/23, C08G 65/40

(54) **POLYARYLENETHERSULFON-POLYMERE FÜR MEMBRANANWENDUNGEN**
POLYARYLENE ETHER SULFONE POLYMERS FOR MEMBRANE APPLICATIONS
POLYMÈRES DE POLYARYLÈNÉTHERSULFONE POUR APPLICATIONS DE MEMBRANES

(30) Priorität: 09.09.2013 EP 13183574
(43) Veröffentlichungstag der Anmeldung: 20.07.2016
(60) Teilanmeldung: 17169719.6
(73) Patentinhaber: BASF SE, 67056 Ludwigshafen am Rhein (DE)
(72) Erfinder: WEBER, Martin, 67487 Maikammer (DE); MALETZKO, Christian, 67122 Altrip (DE); ERBES, Jörg, 76137 Karlsruhe (DE); KORTEKAMP, Tobias, 68159 Mannheim (DE); STAAL, Bastiaan Bram Pieter, 67117 Limburgerhof (DE); HEIL, Thomas, 67157 Wachenheim (DE)
(74) Vertreter: Baier, Martin
(86) Internationale Anmeldenummer: PCT/EP2014/068814
(87) Internationale Veröffentlichungsnummer: WO 2015/032847

(56) Entgegenhaltungen:
- EP-A1- 2 554 564
- EP-A2- 0 278 720
- WO-A1-2012/160172
- WO-A2-01/66620
- DE-A1- 19 907 605

## Beschreibung

Die vorliegende Erfindung betrifft ein Verfahren zur Herstellung eines Polyarylenethersulfon-Polymers durch Umsetzung eines Reaktionsgemischs (R_{G}) enthaltend eine Dihalogenkomponente (A1), eine Dihydroxykomponente (B1) und Kaliumcarbonat (C1) mit einer volumenmittleren Partikelgröße von < 25 µm.

Polyarylenethersulfon-Polymere gehören zur Gruppe der Hochleistungsthermoplaste und zeichnen sich durch hohe Wärmeformbeständigkeit, gute mechanische Eigenschaften und inhärente Flammwidrigkeit aus (E.M. Koch, H.-M. Walter, Kunststoffe 80 (1990) 1146; E. Döring, Kunststoffe 80, (1990) 1149, N. Inchaurondo-Nehm, Kunststoffe 98, (2008) 190). Aufgrund ihrer guten Bioverträglichkeit werden Polyarylenether auch als Material zur Herstellung von Dialysemembranen verwendet (N. A. Hoenich, K. P. Katapodis, Biomaterials 23 (2002) 3853).

Die Herstellung der Polyarylenethersulfon-Polymere kann unter anderem entweder über die Hydroxid-Methode, bei der zuerst aus der Dihydroxykomponente und dem Hydroxid ein Salz hergestellt wird, oder über die sogenannte Carbonat-Methode erfolgen.
Allgemeine Hinweise zur Herstellung der Polyarylenethersulfon-Polymere nach der Hydroxid-Methode finden sich u.a. bei R.N. Johnson et.al., J.Polym. Sci. A-1 5 (1967) 2375, während bei J.E. McGrath et.al., Polymer 25 (1984) 1827, die Carbonat-Methode beschrieben ist.

Verfahren zur Herstellung von Polyarylenethersulfon-Polymeren aus aromatischen Bishalogenverbindungen und aromatischen Bisphenolen oder deren Salzen in Gegenwart mindestens eines Alkalimetall- oder Ammoniumcarbonats oder -hydrogencarbonats in einem aprotischen Lösungsmittel sind dem Fachmann bekannt und werden beispielsweise in EP-A 297 363 und EP-A 135 130 beschrieben.

Die Herstellung von Hochleistungsthermoplasten wie Polyarylenethersulfon-Polymeren erfolgt durch Polykondensationsreaktionen, die üblicherweise bei hoher Reaktionstemperatur in dipolar aprotischen Lösungsmitteln, wie beispielweise DMF, DMAc, Sulfolan, DMSO und NMP durchgeführt werden.

Anwendungen von Polyarylenethersulfon-Polymeren in Polymermembranen gewinnen zunehmend an Bedeutung.

In der EP 0 412 499 ist ein Verfahren zur Herstellung von Polyarylenethersulfon-Polymeren beschrieben. Als Dihalogenkomponente kommen bei dem Verfahren gemäß EP 0 412 499 beispielsweise 4,4'-Dichlordiphenylsulfon oder 4,4'-Difluordiphenylsulfon zum Einsatz. Als Dihydroxykomponente sind in der EP 0 412 499 unter anderem Bisphenol A, 4,4'-Dihydroxydiphenylsulfon und 4,4'-Dihydroxybenzophenon beschrieben. Die Polykondensation gemäß EP 0 412 499 erfolgt in Gegenwart von Natriumcarbonat oder Natriumbicarbonat (Natriumhydrogencarbonat). Das eingesetzte Natriumcarbonat ist dabei fein gemahlen und weist Partikelgrößen (D 90 %) von ≤ 20 µm auf. Die nach dem in der EP 0 412 499 beschriebenen Verfahren erhältlichen Polyarylenethersulfon-Polymere weisen, insbesondere für Membrananwendungen, unzureichende mechanische Eigenschaften auf. Darüber hinaus ist die Polydispersität der nach diesem Verfahren erhältlichen Polyarylenethersulfon-Polymere relativ hoch. Auch die Reaktionsdauer zur Herstellung der Polyarylenethersulfon-Polymere ist für ein wirtschaftliches Verfahren zu lang.

In der WO 01/66620 ist ein Verfahren zur Herstellung von Polybiphenylethersulfon-Polymeren mit niedriger Eigenfarbe beschrieben. Für dieses Verfahren ist es wesentlich, dass als Dihydroxykomponente mindestens 75 mol-%, bevorzugt mindestens 90 mol-% 4,4'-Dihydroxybiphenyl eingesetzt wird. Das in der WO 01/66620 beschriebene Polybiphenylethersulfon-Polymer weist somit mindestens 75 mol-%, bevorzugt mindestens 90 mol-% 4,4'-Biphenylen-Einheiten auf, bezogen auf die eingesetzte Dihydroxyverbindung. Als Dihalogenkomponente wird beispielsweise 4,4'-Dichlordiphenylsulfon beschrieben. Die Polykondensation wird in Gegenwart eines Metallcarbonats, bevorzugt Kaliumcarbonat, durchgeführt, dessen Partikelgröße im Bereich von 10 bis 30 µm liegt. Hierdurch werden Polybiphenylenethersulfon-Polymere mit einer geringen Eigenfarbe erhalten. Die nach dem Verfahren gemäß WO 01/66620 erhältlichen Polybiphenylethersulfon-Polymere weisen, insbesondere für Membrananwendungen, ungenügende mechanische Eigenschaften auf. Darüber hinaus zeichnen sich die Polybiphenylethersulfon-Polymere durch eine relativ hohe Polydispersität aus.

Der vorliegenden Erfindung liegt somit die Aufgabe zugrunde, ein Verfahren zur Herstellung von Polyarylenethersulfon-Polymeren bereitzustellen, das die Nachteile der im Stand der Technik beschriebenen Verfahren nicht oder nur in vermindertem Maße aufweist. Das Verfahren soll innerhalb von kurzen Reaktionszeiten durchführbar sein. Die nach dem Verfahren erhältlichen Polyarylenethersulfon-Polymere sollen eine geringe Polydispersität sowie gute mechanische Eigenschaften, insbesondere im Hinblick auf Membrananwendungen, aufweisen. Darüber hinaus soll das Verfahren innerhalb kurzer Reaktionszeiten einen guten Molekulargewichtsaufbau ermöglichen. Gelöst wird diese Aufgabe durch ein Verfahren gemäß Anspruch 1.

Bei den im Stand der Technik beschriebenen Verfahren zur Herstellung von Polyarylenethersulfon-Polymeren werden meist sehr breite Molekulargewichtsverteilungen erhalten. Ein Maß für die Molekulargewichtsverteilung ist die Polydispersität (Q). Die Polydispersität (Q) ist definiert als Quotient aus dem gewichtsmittleren Molekulargewicht (M_{w}) und dem zahlenmittleren Molekulargewicht (Mₙ). Bei den im Stand der Technik beschriebenen Verfahren werden meist Polydispersitäten (Q) von deutlich größer als 3,5 erhalten. Polyarylenethersulfon-Polymere mit Polydispersitäten (Q) von > 4 sind insbesondere zur Herstellung von Membranen nur bedingt geeignet.

Aus der Literatur ist weiterhin bekannt (S. Savariar, G.S. Underwood, E.M. Dickinson, P.J. Schielke, A.S. Hay, Desalination 144 (2002) 15), dass durch Abtrennung von cyclischen Oligomeren, welche bei der Synthese von Polysulfon entstehen (H. R. Kricheldorf, S. Bohme, G. Schwarz, R.-P. Krüger, G. Schulz. Macromolecules 34 (2001) 8886), die Stabilität von Spinnlösungen für die Herstellung von Hohlfasermembranen verbessert werden können. In der Arbeit von Savariar wird auch die Verbesserung der mechanischen Eigenschaften bei Abtrennung der zyklischen Oligomere erwartet. Die Abtrennung der zyklischen Oligomere ist jedoch nur durch aufwändige Fraktionierung möglich.

Ziel der Erfindung ist es darüber hinaus, ein Verfahren zur Verfügung zu stellen, bei dem zyklische Oligomere nicht abgetrennt werden müssen. Die erfindungsgemäße Aufgabe wird durch das erfindungsgemäße Verfahren gelöst.

### Reaktionsgemisch (R_{G})

Zur Herstellung des erfindungsgemäßen Polyarylenethersulfon-Polymers wird ein Reaktionsgemisch (R_{G}) umgesetzt, welches die vorstehend beschriebenen Komponenten (A1), (B1), (C) und (D) enthält. Die Komponenten (A1) und (B1) gehen dabei eine Polykondensationsreaktion ein.

Die Komponente (D) dient als Lösungsmittel. Die Komponente (C) dient als Base, um die Komponente (B1) während der Kondensationsreaktion zu deprotonieren.

Unter Reaktionsgemisch (R_{G}) wird dabei das Gemisch verstanden, das im erfindungsgemäßen Verfahren zur Herstellung des Polyarylenethersulfon-Polymers eingesetzt wird. Vorliegend beziehen sich alle Angaben in Bezug auf das Reaktionsgemisch (R_{G}) somit auf das Gemisch, das vor der Polykondensation vorliegt. Während des erfindungsgemäßen Verfahrens findet die Polykondensation statt, wobei sich das Reaktionsgemisch (R_{G}) durch Polykondensation der Komponenten (A1) und (B1) zum Zielprodukt, dem Polyarylenethersulfon-Polymer, umsetzt. Das nach der Polykondensation erhaltene Gemisch, welches das Zielprodukt, das Polyarylenethersulfon-Polymer, enthält, wird auch als Produktgemisch (P_{G}) bezeichnet.

In der Regel werden die Komponenten des Reaktionsgemischs (R_{G}) gemeinsam zur Reaktion gebracht. Die einzelnen Komponenten können dabei in einem vorgelagerten Schritt gemischt und anschließend zur Reaktion gebracht werden. Es ist auch möglich, die Einzelkomponenten einem Reaktor zuzuführen, in dem diese gemischt werden und nachfolgend zur Reaktion gebracht werden.

Bei dem erfindungsgemäßen Verfahren werden die einzelnen Komponenten des Reaktionsgemischs (R_{G}) im Allgemeinen gemeinsam umgesetzt. Die Umsetzung erfolgt dabei bevorzugt einstufig. Das heißt, die Deprotonierung der Komponente (B1) sowie die Kondensationsreaktion zwischen den Komponenten (A1) und (B1) erfolgt in einer einzigen Reaktionsstufe, ohne dass Zwischenprodukte, wie beispielsweise die deprotonierten Spezies der Komponente (B1) isoliert werden.

### Komponente (A1)

Als Komponente (A1), die auch als Dihalogenkomponente bezeichnet wird, enthält das Reaktionsgemisch (R_{G}) mindestens eine Dihalogenverbindung. Unter "mindestens eine Dihalogenverbindung" werden vorliegend genau eine Dihalogenverbindung sowie Gemische aus zwei Dihalogenverbindungen verstanden.

Bei der Komponente (A1) kann es sich somit sowohl um eine einzelne Dihalogenverbindung, als auch um eine Mischung aus zwei oder mehreren Dihalogenverbindungen handeln.

Das Reaktionsgemisch (R_{G}) enthält neben den Dihalogenverbindungen der Komponente (A1) keine weiteren Dihalogenverbindungen.

Die Komponente (A1) besteht im Wesentlichen aus mindestens einer Dihalogenverbindung ausgewählt aus der Gruppe bestehend aus 4,4'-Dichlordiphenylsulfon und 4,4'-Difluordiphenylsulfon. Unter "bestehend im Wesentlichen aus" wird vorliegend verstanden, dass die Komponente (A1) mehr als 99 Gew.-%, bevorzugt mehr 99,5 Gew.-%, insbesondere bevorzugt mehr als 99,9 Gew.-% mindestens einer Dihalogenverbindung ausgewählt aus der Gruppe bestehend aus 4,4'-Dichlordiphenylsulfon und 4,4'-Difluordiphenylsulfon enthält, jeweils bezogen auf das Gesamtgewicht der Komponente (A1) im Reaktionsgemisch (R_{G}). Bei diesen Ausführungen ist 4,4'-Dichlordiphenylsulfon als Komponente (A1) besonders bevorzugt.

In einer weiteren besonders bevorzugten Ausführungsform besteht Komponente (A1) im Wesentlichen aus 4,4'-Dichlordiphenylsulfon. In einer weiteren besonders bevorzugten Ausführungsform besteht Komponente (A1) aus 4,4'-Dichlordiphenylsulfon.

### Komponente (B1)

Das Reaktionsgemisch (R_{G}) enthält neben den Dihydroxyverbindungen der Komponente (B1) keine weiteren Dihydroxyverbindungen.

Die Komponente (B1) enthält im Wesentlichen 4,4'-Dihydroxydiphenylsulfon, Bisphenol A (2,2-Bis-(4-hydroxyphenyl)-propan), 4,4'-Dihydroxybenzophenon und Hydrochinon. Unter "bestehend im Wesentlichen aus" wird vorliegend verstanden, dass die Komponente (B1) mehr als 99 Gew.-%, bevorzugt mehr 99,5 Gew.-%, insbesondere bevorzugt mehr als 99,9 Gew.-% Bisphenol A (2,2-Bis-(4-hydroxyphenyl)-propan) enthält, bezogen auf das Gesamtgewicht der Komponente (B1) im Reaktionsgemisch (R_{G}).

Im Wesentlichen aus. In einer weiteren besonders bevorzugten Ausführungsform besteht Komponente (B1) aus Bisphenol A.

Da das Reaktionsgemisch (R_{G}) als Komponente (C) Kaliumkarbonat enthält, können die Hydroxygruppen der als Komponente (B1) eingesetzten Dihydroxyverbindungen im Reaktionsgemisch (R_{G}) teilweise in deprotonierter Form vorliegen.

### Komponente (C)

Das Kaliumkarbonat ist bevorzugt wasserfrei.

Die Komponente (C) besteht im Wesentlichen aus Kaliumkarbonat. Unter "bestehend im Wesentlichen aus" wird vorliegend verstanden, dass die Komponente (C) mehr als 99 Gew.-%, bevorzugt mehr als 99,5 Gew.-%, insbesondere bevorzugt mehr als 99,9 Gew.-% Kaliumkarbonat enthält, jeweils bezogen auf das Gesamtgewicht der Komponente (C) im Reaktionsgemisch (R_{G}).

In einer besonders bevorzugten Ausführungsform besteht Komponente (C) aus Kaliumkarbonat.

Weiterhin ist es besonders bevorzugt, dass das Reaktionsgemisch (R_{G}) neben der Komponente (C) keine weiteren Karbonatverbindungen, insbesondere kein Natriumkarbonat oder Natriumhydrogenkarbonat enthält. In einer bevorzugten Ausführungsform enthält das Reaktionsgemisch (R_{G}) kein Natriumkarbonat und kein Natriumhydrogenkarbonat.

Kaliumkarbonat ist Kaliumkarbonat mit einer volumengewichteten mittleren Teilchengröße (D[4,3]) von weniger als 25 µm. Die volumengewichtete mittlere Teilchengröße (D[4,3]) des Kaliumkarbonats wird dabei bestimmt mit einem Partikelgrößenmessgerät in einer Suspension des Kaliumkarbonats in einer Mischung aus Chlorbenzol und Sulfolan. Die volumengemittelte Partikelgröße (D[4,3]) kann beispielsweise mit einem Mastersizer 2000 der Firma Malvern an einer Suspension der Partikel in Chlorbenzol/Sulfolan (60/40) bestimmt werden.

Besonders bevorzugt ist Kaliumkarbonat mit einer volumengemittelten Partikelgröße (D[4,3]) kleiner 15 µm. Besonders bevorzugtes Kaliumkarbonat weist eine volumengemittelte Partikelgröße im Bereich von 20 nm bis 15 µm auf.

Das Reaktionsgemisch (R_{G}) enthält als Komponente (D) mindestens ein aprotisches polares Lösungsmittel. Unter "mindestens ein aprotisches polares Lösungsmittel" werden erfindungsgemäß genau ein aprotisches polares Lösungsmittel sowie Gemische aus zwei aprotischen polaren Lösungsmitteln verstanden.

### Komponente (D)

Die Komponente (D) besteht im Wesentlichen aus mindestens einem Lösungsmittels ausgewählt aus der Gruppe bestehend aus N-Methyl-2-Pyrrolidon und N-Ethyl-2-Pyrrolidon. Unter "bestehend im Wesentlichen aus" wird vorliegend verstanden, dass die Komponente (D) mehr als 99 Gew.-%, insbesondere bevorzugt mehr als 99,5 Gew.-%, insbesondere bevorzugt mehr als 99,9 Gew.-% mindestens eines aprotischen polaren Lösungsmittels ausgewählt aus der Gruppe bestehend aus N-Methyl-2-Pyrrolidon und N-Ethyl-2-Pyrrolidon enthält, jeweils bezogen auf das Gesamtgewicht der Komponente (D) im Reaktionsgemisch (R_{G}), wobei N-Methyl-2-Pyrrolidon bevorzugt ist.

In einer bevorzugten Ausführungsform besteht Komponente (D) aus N-Methyl-2-Pyrrolidon. N-Methyl-2-Pyrrolidon wird auch als NMP oder N-Methylpyrrolidon bezeichnet.

In einer weiteren bevorzugten Ausführungsform enthält das Reaktionsgemisch neben der aprotischen polaren Lösungsmitteln der Komponente (D) keine weiteren aprotischen polaren Lösungsmittel.

Das Verhältnis der Komponenten (A1) und (B1) im Reaktionsgemisch (R_{G}) kann in weiten Bereichen variieren. Bevorzugt liegt das molare Verhältnis der Komponente (B1) zu (A1) im Bereich von 0,95 bis 1,05 zu 1. bevorzugt im Bereich von 0,97 bis 1,03 zu 1.

### Polyarylenethersulfon-Polymer

Zur Herstellung des Polyarylenethersulfon-Polymers wird das Reaktionsgemisch (R_{G}) unter Bedingungen der sogenannten Karbonatmethode zur Reaktion gebracht. Die Umsetzung (Polykondensationsreaktion) erfolgt dabei im Allgemeinen bei Temperaturen im Bereich von 80 bis 250 °C, bevorzugt im Bereich von 100 bis 220 °C, wobei die Obergrenze der Temperatur durch den Siedepunkt des aprotischen polaren Lösungsmittels (Komponente D) bei Normaldruck (1013,25 mbar) bestimmt wird. Die Umsetzung wird im Allgemeinen bei Normaldruck durchgeführt. Die Umsetzung erfolgt vorzugsweise in einem Zeitintervall von 2 bis 12 Stunden, insbesondere im Bereich von 3 bis 10 Stunden.

Die Isolierung des erhaltenen Polyarylenethersulfon-Polymers kann beispielsweise durch Fällung der Polymerlösung in Wasser oder Gemischen von Wasser mit weiteren Lösungsmitteln erfolgen. Das ausgefällte Polyarylenethersulfon-Polymer kann anschließend mit Wasser extrahiert und danach getrocknet werden. In einer Ausführungsform kann die Fällung auch in einem sauren Medium vorgenommen werden. Geeignete Säuren sind beispielsweise organische oder anorganische Säuren. beispielsweise Carbonsäuren wie Essigsäure, Propionsäure, Bernsteinsäure oder Zitronensäure sowie Mineralsäuren wie beispielsweise Salzsäure, Schwefelsäure oder Phosphorsäure.

Durch das erfindungsgemäße Verfahren werden Polyarylenethersulfon-Polymere mit niedrigen Polydispersitäten (Q) erhalten.

Das Polyarylenethersulfon-Polymer weist im Allgemeinen eine Polydispersität (Q) von ≤ 4, bevorzugt von ≤ 3,5 auf.

Die Polydispersität (Q) ist definiert als Quotient aus dem gewichtsmittleren Molekulargewicht (M_{w}) und dem zahlenmittleren Molekulargewicht (Mₙ). In einer bevorzugten Ausführungsform liegt die Polydispersität (Q) des Polyarylenethersulfon-Polymers im Bereich von 2,0 bis ≤ 4, bevorzugt im Bereich von 2,0 bis ≤ 3,5.

Das gewichtsmittlere Molekulargewicht (M_{w}) und das zahlenmittlere Molekulargewicht (Mₙ) werden mittels Gelpermeationschromatographie gemessen.

Die Polydispersität (Q) und die mittleren Molekulargewichte des Polyarylenethersulfon-Polymers wurden mittels Gelpermeationschromatographie (GPC) gemessen. Als Lösungsmittel wurde Dimethylacetamid (DMAc) verwendet und gegen engverteiltes Polymethylmethacrylat als Standard gemessen.

Das nach dem Verfahren erhältliche Polyarylenethersulfon-Polymer weist im Allgemeinen gewichtsmittlere Molekulargewichte (M_{w}) von 10 000 bis 150 000 g/mol, bevorzugt im Bereich von 15 000 bis 120 000 g/mol, besonders bevorzugt im Bereich von 18 000 bis 100 000 g/mol auf. Die gewichtsmittleren Molekulargewichte (M_{w}) werden mittels Gelpermeationschromatographie (GPC) gemessen. Die Messung erfolgt dabei wie vorstehend beschrieben.

Die Polyarylenethersulfon-Polymere weisen in Abhängigkeit von den Reaktionsbedingungen und den molaren Verhältnissen der Komponenten (A1) und (B1) im Allgemeinen entweder Halogenendgruppen, insbesondere Chlorendgruppen, oder veretherte Endgruppen, insbesondere Alkyletherendgruppen, auf. Die veretherten Endgruppen sind durch Umsetzung der OH- bzw. Phenolat-Endgruppen mit geeigneten Veretherungsmitteln erhältlich.

Geeignete Veretherungsmittel sind beispielsweise monofunktionelles Alkyl- oder Arylhalogenid, beispielsweise C₁-C₆-Alkylchlorid, -bromid oder -iodid, bevorzugt Methylchlorid, oder Benzylchlorid, -bromid oder -iodid oder Mischungen davon. Bevorzugte Endgruppen des erfindungsgemäßen Polyarylenethersulfon-Polymere sind Halogenendgruppen, insbesondere Chlor, sowie Alkoxyendgruppen, insbesondere Methoxy, Aryloxyendgruppen, insbesondere Phenoxy, oder Benzyloxy.

Aufgrund der guten Hydrolysebeständigkeit, begründet in der geringen Hydrophilie, werden Polyarylenethersulfon-Polymere, besonders lineare Polyarylenethersulfon-Polymere, seit vielen Jahren als Membranmaterialien verwendet. So beschreiben zum Beispiel S. Savariar et al., Desalination 144 (2002) 15 bis 20, die Verwendung von Polysulfon zur Herstellung von Dialysemembranen. Da Polysulfon relativ wenig Wasser absorbiert, wird bei der Herstellung solcher Dialysemembranen üblicherweise ein hydrophiles Polymer, wie beispielsweise Polyvinylpyrrolidon (PVP) als Additiv verwendet.

Die DE-A 10 2005 001 599 beschreibt funktionalisierte, verzweigte Polyarylenethersulfon-Copolymere, die sulfonierte und nicht-suifonierte Einheiten enthalten. Die Herstellung der sulfonierten Polyarylenethersulfon-Copolymere erfolgt über eine Sulfonierung aus den entsprechenden verzweigten Polyarylenethersulfon-Copolymeren. Die Veröffentlichungsschrift erwähnt die Verwendung der sulfonierten Copolymere zur Herstellung von Membranen. Außerdem finden Polymerblends aus den vorgenannten sulfonierten Polyarylenethersulfon-Copolymeren und zahlreichen Blendpartnern Erwähnung, wobei unter anderem Polyvinylpyrrolidon aufgezählt wird. Die DE-A 10 2005 001 599 offenbart jedoch weder Blends aus nicht-sulfonierten verzweigten Polyarylenethersulfon-Polymeren noch geht sie auf die besonderen Anforderungen bei der Verwendung zur Herstellung von Hohlfasermembranen ein.

### Eingesetzte Komponenten:

DCDPS: 4,4'-Dichlordiphenylsulfon,
Bisphenol A: 2,2-Eis-(4-hydroxyphenyl)-propan
Dihydroxybiphenyl: 4,4'-Dihydroxybiphenyl

| | |
|---|---|
| Kaliumkarbonat: | K₂CO₃, wasserfrei, volumengemittelte Partikelgröße (siehe Tabelle) |
| Natriumkarbonat: | Na₂CO₃, wasserfrei, volumengemittelte Partikelgröße (siehe Tabelle) |
| NMP: | N-Methylpyrrolidon, wasserfrei, |

Mₙ, M_{w} und Q wurden wie vorstehend beschrieben bestimmt.

Die Viskositätszahl VZ wurde nach DIN ISO 1628-1 in einer 1-Gew.-%igen NMP-Lösung bei 25°C gemessen.

Die Isolierung der Polyarylethersulfon-Polymere erfolgt durch Zertropfung einer NMP-Lösung der Polymere in VE-Wasser bei Raumtemperatur (20°C). Die Fallhöhe beträgt 0,5 m. Der Durchsatz beträgt ca. 2,5 I pro Stunde. Die erhaltenen Perlen werden anschließend bei 85 °C für zwanzig Stunden mit Wasser extrahiert (Wasserdurchsatz 160 I/h). Danach werden die Perlen bei einer Temperatur unterhalb der Glastemperatur T_{g} auf eine Restfeuchte von weniger als 0,1 Gew.-% getrocknet

Die volumengemittelte Partikelgröße (D[4,3]) des verwendeten Kaliumkarbonats bzw. Natriumkarbonats wurde mit einem Mastersizer 2000 der Firma Malvern an einer Suspension der Partikel in Chlorbenzol/Sulfolan (60/40) bestimmt.

Die Molekulargewichtsverteilung der Polyarylethersulfon-Polymere wurde durch GPC-Messung in DMAc bestimmt. Die Molekulargewichte der Polyarylethersulfon-Polymere wurden auch durch Viskositätsmessungen (1 gew.-%-ige Lösung in NMP) charakterisiert.

Der Anteil an cyclischem Dimer wurde mittels HPLC mit THFals flüssiger Phase und PLGEL^{®} Säulen bestimmt.

Die vorteilhaften Eigenschaften der erfindungsgemäßen Polyarylethersulfon-Polymere für Membrananwendungen wurden anhand folgender Versuche demonstriert.

Die Lösungen zur Herstellung der Hohlfasermembran wurden wie folgt hergestellt: Zuerst wurde das Polyarylethersulfon-Polymer in NMP gelöst. Anschließend wurde Polyvinylpyrrolidon (PVP, M_{w}=360.000 g/mol, T_{g}=176°C, Fa. Merck) zu dieser Lösung hinzugefügt, bis die Zusammensetzung 16/10/74 Gew.-% (Polyarylethersulfon-Polymere /PVP/NMP) erreicht wurde. Diese Lösung wurde anschließend 48 h bei Raumtemperatur gerührt. Vor dem Verspinnen wurden die Lösungen 1 Tag entgast.

Die Herstellung der Hohlfasermembranen erfolgte im Trockendüsen-Nassspinnverfahren gemäß der Publikation Q.Tang, T.S. Chung, Y.E. Santoso, Journal of Membrane Science, 2007, 290, Seiten 153-163.

Die Zusammensetzung der Kernflüssigkeit war dabei 55:45 Gewichtsteile NMP:deionisiertes Wasser. Die Distanz zwischen der Spinndüse und dem Fällbad betrug 20 cm. Zur Fällung wurde ein 2-stufiger Fällprozess mit Isopropanol als erste Koagulationsflüssigkeit im ersten Fällbad und Wasser als zweite Koagulationsflüssigkeit im zweiten Fällbad verwendet. Die Abzugsgeschwindigkeit der Fasern war gleich der Spinngeschwindigkeit (8,6 cm/s). Anschließend wurden die Fasern 3 Tage in Wasser gelagert. Vor der Zug-Dehnungsmessung werden die Fasern aus dem Wasser entnommen, äußerlich anhaftendes Wasser wird entfernt, danach werden die Proben 48 Stunden bei 23°C und 50% relativer Luftfeuchtigkeit gelagert. Danach werden die Fasern auf eine Länge von 150 mm geschnitten und in einer Zwick/Roell Zug-Dehnungsapparatur Z010 mit einer Dehnrate von 20 mm/min bis zum Bruch gezogen.

Die Ergebnisse der Prüfungen sind in Tabellen 1 aufgeführt.

Herstellung der Polyarylethersulfon-Polymere:

### Vergleich: Polysulfon V1

In einen 4L-Reaktor mit Innenthermometer, Gaseinleitungsrohr, Rückflusskühler mit Wasserabscheider wurden 430,62 g DCDPS, 342,08 g Bisphenol A und 222,86 g Kaliumkarbonat einer volumengemittelten Partikelgröße von 32,4 µm unter Stickstoffatmosphäre in 641 ml NMP suspendiert. Innerhalb 1 h wird der Ansatz auf 190°C erhitzt. Als Reaktionsdauer wird die Verweilzeit bei 190°C betrachtet. Das Reaktionswasser wird abdestilliert und der Füllstand durch Zufügen von NMP während der Reaktion konstant gehalten. Nach 8 h Reaktionszeit wird die Reaktion durch Verdünnung mit kaltem NMP (1609 ml) abgebrochen, anschließend wird bei 140°C für 45 Minuten Methylchlorid (10 l/h) in den Ansatz eingeleitet (45 Minuten). Danach wird Stickstoff eingeleitet (20 l/h) und der Ansatz abgekühlt. Das entstandene Kaliumchlorid wird abfiltriert.

### Erfindungsgemäß: Polysulfon 2

In einen 4L-Reaktor mit Innenthermometer, Gaseinleitungsrohr, Rückflusskühler mit Wasserabscheider wurden 430,62 g DCDPS, 342,08 g Bisphenol A und 222,86 g Kaliumkarbonat einer volumengemittelten Partikelgröße von 22,4 µm unter Stickstoffatmosphäre in 641 ml NMP suspendiert. Innerhalb 1 h wird der Ansatz auf 190°C erhitzt. Als Reaktionsdauer wird die Verweilzeit bei 190°C betrachtet. Das Reaktionswasser wird abdestilliert und der Füllstand durch Zufügen von NMP während der Reaktion konstant gehalten. Nach 6,5 h Reaktionszeit wird die Reaktion durch Verdünnung mit kaltem NMP (1609 ml) abgebrochen, anschließend wird bei 140°C für 45 Minuten Methylchlorid (10 l/h) in den Ansatz eingeleitet (45 Minuten). Danach wird Stickstoff eingeleitet (20 l/h) und der Ansatz abgekühlt. Das entstandene Kaliumchlorid wird abfiltriert.

### Erfindungsgemäß: Polysulfon 3

In einen 4L-Reaktor mit Innenthermometer, Gaseinleitungsrohr, Rückflusskühler mit Wasserabscheider wurden 430,62 g DCDPS, 342,08 g Bisphenol A und 222,86 g Kaliumkarbonat einer volumengemittelten Partikelgröße von 12,4 µm unter Stickstoffatmosphäre in 641 ml NMP suspendiert. Innerhalb 1 h wird der Ansatz auf 190°C erhitzt. Als Reaktionsdauer wird die Verweilzeit bei 190°C betrachtet. Das Reaktionswasser wird abdestilliert und der Füllstand durch Zufügen von NMP während der Reaktion konstant gehalten. Nach 5 h Reaktionszeit wird die Reaktion durch Verdünnung mit kaltem NMP (1609 ml) abgebrochen, anschließend wird bei 140°C für 45 Minuten Methylchlorid (10 l/h) in den Ansatz eingeleitet (45 Minuten). Danach wird Stickstoff eingeleitet (20 l/h) und der Ansatz abgekühlt. Das entstandene Kaliumchlorid wird abfiltriert.

### Vergleich: Polysulfon V4

In einen 4L-Reaktor mit Innenthermometer, Gaseinleitungsrohr. Rückflusskühler mit Wasserabscheider wurden 430,62 g DCDPS, 342,08 g Bisphenol A und 170,91 g Natriumkarbonat einer Partikelgröße von 23,2 µm unter Stickstoffatmosphäre in 641 ml NMP suspendiert. Innerhalb 1 h wird der Ansatz auf 190°C erhitzt. Als Reaktionsdauer wird die Verweilzeit bei 190°C betrachtet. Das Reaktionswasser wird abdestilliert und der Füllstand durch Zufügen von NMP während der Reaktion konstant gehalten. Nach 9 h Reaktionszeit wird die Reaktion durch Verdünnung mit kaltem NMP (1609 ml) abgebrochen, anschließend wird bei 140°C für 45 Minuten Methylchlorid (10 I/h) in den Ansatz eingeleitet (45 Minuten). Danach wird Stickstoff eingeleitet (20 l/h) und der Ansatz abgekühlt. Das entstandene Natriumchlorid wird abfiltriert.

### Vergleich: Polysulfon V5

In einen 4L-Reaktor mit Innenthermometer, Gaseinleitungsrohr, Rückflusskühler mit Wasserabscheider wurden 430,62 g DCDPS, 342,08 g Bisphenol A und 170.91 g Natriumkarbonat einer Partikelgröße von 11,9 µm unter Stickstoffatmosphäre in 641 ml NMP suspendiert. Innerhalb 1 h wird der Ansatz auf 190°C erhitzt. Als Reaktionsdauer wird die Verweilzeit bei 190°C betrachtet. Das Reaktionswasser wird abdestilliert und der Füllstand durch Zufügen von NMP während der Reaktion konstant gehalten. Nach 9 h Reaktionszeit wird die Reaktion durch Verdünnung mit kaltem NMP (1609 ml) abgebrochen, anschließend wird bei 140°C für 45 Minuten Methylchlorid (10 l/h) in den Ansatz eingeleitet (45 Minuten). Danach wird Stickstoff eingeleitet (20 l/h) und der Ansatz abgekühlt. Das entstandene Natriumchlorid wird abfiltriert.

### Vergleich: PPSU V6

In einen 4L-Reaktor mit Innenthermometer, Gaseinleitungsrohr, Rückflusskühler mit Wasserabscheider wurden 574,16 g DCDPS, 379,87 g Dihydroxybiphenyl und 286,09 g Kaliumkarbonat einer Partikelgröße von 23,2 µm unter Stickstoffatmosphäre in 2100 ml NMP suspendiert. Innerhalb 1 h wird der Ansatz auf 190°C erhitzt. Als Reaktionsdauer wird die Verweilzeit bei 190°C betrachtet. Das Reaktionswasser wird abdestilliert und der Füllstand durch Zufügen von NMP während der Reaktion konstant gehalten. Nach 6 h Reaktionszeit wird die Reaktion durch Verdünnung mit kaltem NMP (900 ml) abgebrochen, anschließend wird bei 140°C für 45 Minuten Methylchlorid (10 lih) in den Ansatz eingeleitet (45 Minuten). Danach wird Stickstoff eingeleitet (20 l/h) und der Ansatz abgekühlt. Das entstandene Kaliumchlorid wird abfiltriert.

**Tabelle 1:**

| Polyarylenethersulfon-Polymer | V1 | 2 | 3 | V4 | V5 | V6 |
|---|---|---|---|---|---|---|
| K₂CO₃ Partikelgröße [µm] | 32,4 | 22,4 | 12,4 | - | - | 23,2 |
| Na₂CO₃ Partikelgröße [µm] | - | - | - | 23,2 | 11,9 | - |
| Reaktionszeit [h] | 8 | 6,5 | 5 | 9 | 9 | 6 |
| VZ [ml/g] | 77,4 | 78,2 | 78,7 | 21,5 | 22,3 | 73,9 |
| Cycl. Dimer [Gew.-%] | 1,07 | 1,08 | 1,08 | - | - | - |
| | | | | | | |

| GPC | | | | | | |
|---|---|---|---|---|---|---|
| Mw [g/mol] | 67890 | 68540 | 69450 | - | - | 61400 |
| Mn [g/mol] | 16550 | 21390 | 23450 | - | - | 16140 |
| Mw/Mn | 4,1 | 3,1 | 3,0 | - | - | 3,8 |

| Polyarylenethersutfon-Polymer | V1 | 2 | 3 | V4 | V5 | V6 |
|---|---|---|---|---|---|---|
| εBruch [%] | 41+/-5 | 67+/-5 | 65+/-4 | - | - | - |

### Hohlfasermembran

Die Polyarylenethersulfon-Polymere weisen bei kürzerer Reaktionszeit vergleichbare Viskositätszahlen (VZ), aber engere Molekulargewichtsverteilung auf. Aus diesen Polyarylenethersulfon-Polymere hergestellte Hohlfasermembranen weisen überraschenderweise bessere mechanische Eigenschaften auf. Die Versuche V4 und V5 zeigen, dass bei der Verwendung von Natriumkarbonat kein ausreichender Molekulargewichtsaufbau erreicht wird, daher wurden keine weiteren Analysen durchgeführt. Beispiel V6 zeigt, dass PPSU eine breitere Molekulargewichtsverteilung aufweist. Unter den für V1, 2 und 3 gewählten Versuchsbedingungen konnte aus dem Polyarylenethersulfon-Polymer gemäß Beispiel V6 keine Hohlfasermembran hergestellt werden.

## Patentansprüche

1. Verfahren zur Herstellung eines Polyarylenethersulfon-Polymers durch Umsetzen eines Reaktionsgemischs (R_{G}) enthaltend die Komponenten:
(A1) eine Dihalogenkomponente, die mehr als 99 Gew.-% einer Dihalogenverbindung ausgewählt aus der Gruppe bestehend aus 4,4'-Dichlordiphenylsulfon und 4,4'-Difluordiphenylsulfon enthält, jeweils bezogen auf das Gesamtgewicht der Komponente (A1) im Reaktionsgemisch (R_{G}),
(B1) eine Dihydroxykomponente, die mehr als 99 Gew.-% Bisphenol A enthält, bezogen auf das Gesamtgewicht der Komponente (B1) im Reaktionsgemisch (R_{G}),
(C) eine Karbonatkomponente, die mehr als 99 Gew.-% Kaliumcarbonat, das eine volumengemittelte Partikelgröße von 20 nm bis < 25 µm aufweist, enthält, bezogen auf das Gesamtgewicht der Komponente (C) im Reaktionsgemisch (R_{G}), und
(D) ein aprotisches polares Lösungsmittel, das mehr als 99 Gew.-% eines aprotischen polaren Lösungsmittels ausgewählt aus der Gruppe bestehend aus N-Methyl-2-Pyrrolidon und N-Ethyl-2-Pyrrolidon enthält, jeweils bezogen auf das Gesamtgewicht der Komponente (D) im Reaktionsgemisch (R_{G}),
wobei das Reaktionsgemisch (R_{G})
i) neben den Dihalogenverbindungen der Komponente (A1) keine weiteren Dihalogenverbindungen enthält, und
ii) neben der Dihydroxyverbindung der Komponente (B1) keine weiteren Dihydroxyverbindungen enthält.

2. Verfahren gemäß Anspruch 1, **dadurch gekennzeichnet, dass** das Kaliumcarbonat eine volumengemittelte Partikelgröße im Bereich von 20 nm bis 15 µm aufweist.

## Claims

1. A method of forming a polyarylene ether sulfone polymer by converting a reaction mixture (R_{G}) comprising as components:
(A1) a dihalogen component comprising more than 99 wt% of a dihalogen compound selected from the group consisting of 4,4'-dichlorodiphenyl sulfone and 4,4'-difluorodiphenyl sulfone, each based on the overall weight of component (A1) in reaction mixture (R_{G}),
(B1) a dihydroxy component comprising more than 99 wt% of bisphenol A, based on the overall weight of component (B1) in reaction mixture (R_{G}),
(C) a carbonate component comprising more than 99 wt% of potassium carbonate having a volume-averaged particle size of 20 nm to < 25 µm, based on the overall weight of component (C) in reaction mixture (R_{G}), and
(D) an aprotic polar solvent comprising more than 99 wt% of an aprotic polar solvent selected from the group consisting of N-methyl-2-pyrrolidone and N-ethyl-2-pyrrolidone, each based on the overall weight of component (D) in reaction mixture (R_{G}),
wherein reaction mixture (R_{G})
i) does not contain any further dihalogen compounds in addition to the dihalogen compounds of component (Al), and
ii) does not contain any further dihydroxy compounds in addition to the dihydroxy compounds of component (B1).

2. The method according to claim 1, wherein the potassium carbonate has a volume-averaged particle size in the range from 20 nm to 15 µm.

## Revendications

1. Procédé de fabrication d'un polymère de polyarylène-éther-sulfone par mise en réaction d'un mélange réactionnel (R_{G}) contenant les composants :
(A1) un composant dihalogène, qui contient plus de 99 % en poids d'un composé dihalogéné choisi dans le groupe constitué par la 4,4'-dichlorodiphénylsulfone et la 4,4'-difluorodiphénylsulfone, à chaque fois par rapport au poids total du composant (A1) dans le mélange réactionnel (R_{G}),
(B1) un composant dihydroxy, qui contient plus de 99 % en poids de bisphénol A, par rapport au poids total du composant (B1) dans le mélange réactionnel (R_{G}),
(C) un composant carbonate, qui contient plus de 99 % en poids de carbonate de potassium, qui présente une taille de particule moyennée en volume de 20 nm à < 25 µm, par rapport au poids total du composant (C) dans le mélange réactionnel (R_{G}), et
(D) un solvant polaire aprotique qui contient plus de 99 % en poids d'un solvant polaire aprotique choisi dans le groupe constitué par la N-méthyl-2-pyrrolidone et la N-éthyl-2-pyrrolidone, à chaque fois par rapport au poids total du composant (D) dans le mélange réactionnel (R_{G}),
le mélange réactionnel (R_{G})
i) ne contenant, outre les composés dihalogénés du composant (Al), aucun autre composé dihalogéné, et
ii) ne contenant, outre le composé dihydroxy du composant (B1), aucun autre composé dihydroxy.

2. Procédé selon la revendication 1, **caractérisé en ce que** le carbonate de potassium présente une taille de particule moyennée en volume dans la plage de 20 nm à 15 µm.
